# EUROPÄISCHE PATENTSCHRIFT

(11) **EP 2 567 125 B1**
(45) Veröffentlichungstag und Bekanntmachung des Hinweises auf die Patenterteilung: **25.05.2016**
(21) Anmeldenummer: 11712251.5
(22) Anmeldetag: 04.04.2011
(51) Int. Cl.: F16H 59/68, F16H 61/30, F15B 15/28

(54) **VORRICHTUNG ZUM BESTIMMEN EINES BETRIEBSZUSTANDES VON WENIGSTENS EINER BIDIREKTIONAL BETÄTIGBAREN HYDRAULISCHEN STELLEINRICHTUNG EINES SCHALTELEMENTES EINER GETRIEBEEINRICHTUNG**
DEVICE FOR DETERMINING AN OPERATING STATE OF AT LEAST ONE BIDIRECTIONALLY ACTUABLE HYDRAULIC ADJUSTING DEVICE OF A SHIFTING ELEMENT OF A TRANSMISSION DEVICE
DISPOSITIF POUR DÉTERMINER UN ÉTAT OPÉRATIONNEL D'AU MOINS UN DISPOSITIF DE COMMANDE HYDRAULIQUE À ACTIONNEMENT BIDIRECTIONNEL D'UN ÉLÉMENT DE CHANGEMENT DE RAPPORT D'UN ÉQUIPEMENT DE BOÎTE DE VITESSES

(30) Priorität: 07.05.2010 DE 102010028762
(43) Veröffentlichungstag der Anmeldung: 13.03.2013
(73) Patentinhaber: ZF Friedrichshafen AG, 88038 Friedrichshafen (DE)
(72) Erfinder: POPP, Christian, 88079 Kressbronn (DE); SCHMIDT, Thilo, 88074 Meckenbeuren (DE)
(86) Internationale Anmeldenummer: PCT/EP2011/055156
(87) Internationale Veröffentlichungsnummer: WO 2011/138102

(56) Entgegenhaltungen:
- EP-A2- 1 067 319
- EP-A2- 1 270 954
- EP-A2- 1 621 777
- DE-A1-102006 030 034

## Beschreibung

Die Erfindung betrifft eine Vorrichtung zum Bestimmen eines Betriebszustandes von wenigstens einer bidirektional betätigbaren hydraulischen Stelleinrichtung eines Schaltelementes einer Getriebeeinrichtung gemäß der im Oberbegriff des Patentanspruches 1 näher definierten Art (siehe EP 1 621 777 A).

Da von Maschinen und Fahrzeugen während Ihres Lebenszyklus, d.h. von der Herstellung bis zur Demontage, Gefahren für Mensch, Maschine bzw. Fahrzeug und Umwelt ausgehen, werden diese Gefahren bereits in der Konstruktionsphase der Maschine bzw. des Fahrzeuges ermittelt und versucht, diese durch geeignete Maßnahmen zu verringern. Dabei bezeichnet die Gesamtsicherheit einer Maschine bzw. eines Fahrzeuges den Zustand, der frei von unvertretbaren Risiken für den Menschen ist oder als gefahrenfrei angesehen wird. Der Begriff funktionale Sicherheit bezeichnet wiederum den Teil der Gesamtsicherheit des Systems, der von der konkreten Funktion der sicherheitsbezogenen Systeme und externer Einrichtungen zur Risikominderung abhängt.

Die Teile von Maschinen- oder Fahrzeugsteuerungen, die Sicherheitsaufgaben übernehmen, werden in internationalen Normen als sicherheitsbezogene Teile von Steuerungen bezeichnet. Diese Teile können aus Hardware oder Software bestehen und separater oder integraler Bestandteil der Maschinensteuerung bzw. Fahrzeugsteuerung sein. Sicherheitsbezogene Steuerungsteile umfassen jeweils die gesamte Wirkungskette einer Sicherheitsfunktion, bestehend aus einer Input-Ebene, wie einem Sensor, der Logik, d.h. eine sichere Signalverarbeitung, und der Output-Ebene, die beispielsweise durch einen Aktor realisiert wird.

Allgemeine Zielsetzung ist es, diese Steuerungsteile so zu gestalten, dass die Sicherheit der Steuerungsfunktion sowie das Verhalten der Steuerung im Fehlerfall, dem in der Risikobeurteilung ermittelten Grad an Risikoreduzierung entspricht.

Zur Überwachung der Funktion von bidirektional betätigten hydraulischen Stellgliedern, wie Kupplungskolben oder Steuerkolben, werden bei aus der Praxis bekannten Getriebeeinrichtungen konstruktiv aufwändige Wegsensoriken bzw. Drucksensoriken verwendet. Dabei werden als Wegsensoren entweder sehr teure analoge Sensoren oder aber mindestens zwei Endlagenschalter verbaut. Der Einsatz solcher Wegsensoren oder Endlagenschalter erhöht den konstruktiven Aufwand einer Getriebeeinrichtung, da beispielsweise die Position eines Kupplungskolbens in einer Getriebeeinrichtung nur direkt vor Ort, d.h. also direkt im Bereich des betreffenden Getriebeteils, ermittelbar ist.

Soll die Funktion von im Betrieb einer Getriebeeinrichtung rotierenden Getriebebauteilen überwacht werden, ist eine Vorrichtung zum Bestimmen eines Betriebszustandes zumindest teilweise mit einer telemetrischen Messdatenermittlung auszuführen, die im Serieneinsatz nachteilhafterweise nur mit hohem Aufwand betreibbar ist.

Der vorliegenden Erfindung liegt daher die Aufgabe zugrunde, eine kostengünstige und konstruktiv einfache Vorrichtung zum Bestimmen eines Betriebszustandes von wenigstens einer bidirektional betätigbaren hydraulischen Stelleinrichtung eines Schaltelementes einer Getriebeeinrichtung zur Verfügung zu stellen.

Erfindungsgemäß wird diese Aufgabe mit einer Vorrichtung mit den Merkmalen des Patentanspruches 1 gelöst.

Bei der erfindungsgemäßen Vorrichtung zum Bestimmen eines Betriebszustandes von wenigstens einer bidirektional betätigbaren hydraulischen Stelleinrichtung eines Schaltelementes einer Getriebeeinrichtung, die im Bereich von Wirkflächen eines Kolbenelementes jeweils mit Hydraulikdruck beaufschlagbar ist, greift an dem Kolbenelement bei Anlegen eines Hydraulikdruckes eines Hochdruckbereiches im Bereich einer ersten Wirkfläche ein in Richtung einer ersten Endlage des Kolbenelementes wirkende Kraftkomponente und bei Anlegen eines Hydraulikdruckes des Hochdruckbereiches im Bereich einer zweiten Wirkfläche ein in Richtung einer zweiten Endlage des Kolbenelementes wirkende Kraftkomponente an.

Erfindungsgemäß sind mit Hydraulikdruck beaufschlagbare und den Wirkflächen des Kolbenelementes zugeordnete Bereiche der Stelleinrichtung in Stellungen des Kolbenelementes zwischen den Endlagen über eine Drosseleinrichtung miteinander verbunden, wobei jeweils einer der Bereiche zum Verstellen des Kolbenelementes mit dem Hochdruckbereich und der andere Bereich mit dem Niederdruckbereich koppelbar ist. Zusätzlich sind stromauf des Niederdruckbereiches eine weitere Drosseleinrichtung und wiederum stromauf der weiteren Drosseleinrichtung eine Druckmesseinrichtung vorgesehen.

Die erfindungsgemäße Vorrichtung des im Vergleich zu aus der Praxis bekannten Ausführungsformen zur Funktionsüberwachung von bidirektional betätigten hydraulischen Stellgliedern, wie Kupplungskolben oder Steuerkolben, ist konstruktiv einfacher ausführbar und kostengünstiger herstellbar, da die Positionssensierung eines Steuer- oder Kupplungskolbens durch einen einfachen Drucksensor bzw. Druckschalter durchführbar ist, der idealerweise direkt im Bereich der hydraulischen Betätigung anordenbar ist und nicht unmittelbar im Bereich des zu überwachenden Bauteiles zu positionieren ist.

Sowohl die in den Patentansprüchen angegebenen Merkmale als auch die in den nachfolgenden Ausführungsbeispielen der erfindungsgemäßen Vorrichtung angegebenen Merkmale sind jeweils für sich alleine oder in beliebiger Kombination miteinander geeignet, den erfindungsgemäßen Gegenstand weiterzubilden. Die jeweiligen Merkmalskombinationen stellen hinsichtlich der Weiterbildung des Gegenstandes nach der Erfindung keine Einschränkung dar, sondern weisen im Wesentlichen lediglich beispielhaften Charakter auf.

Weitere Vorteile und vorteilhafte Ausführungsformen des erfindungsgemäßen Hydrauliksystems ergeben sich aus den Patentansprüchen und den nachfolgend unter Bezugnahme auf die Zeichnung prinzipmäßig beschriebenen Ausführungsbeispielen, wobei in der Beschreibung der verschiedenen Ausführungsbeispiele zugunsten der Übersichtlichkeit für bau- und funktionsgleiche Bauteile dieselben Bezugszeichen verwendet werden.

### Es zeigt:

- Fig. 1: ein Hydraulikschema einer Vorrichtung zum Bestimmen eines Betriebszustandes von zwei bidirektional betätigbaren hydraulischen Stelleinrichtungen von Schaltelementen einer Getriebeeinrichtung;
- Fig. 2: eine vergrößerte Einzeldarstellung eines Kolbenelementes einer Stelleinrichtung gemäß Fig. 1;
- Fig. 3: eine Fig. 1 entsprechende Darstellung eines zweiten Ausführungsbeispieles der erfindungsgemäßen Vorrichtung;
- Fig. 4: eine Fig. 1 entsprechende Darstellung einer dritten Ausführungsform der erfindungsgemäßen Vorrichtung;
- Fig. 5: eine Charakteristik eines sich im Bereich einer Drosseleinrichtung einstellenden Staudruckes in Abhängigkeit eines Druckes eines Hochdruckbereiches bzw. in Abhängigkeit von der sich nicht in Endlage befindenden Kolbenelemente der Stelleinrichtungen der Vorrichtung gemäß Fig. 1;.
- Fig.6: eine Fig. 5 entsprechende Darstellung die Vorrichtung gemäß Fig. 3 betreffend;
- Fig.7: eine allgemeine graphische Darstellung der wegabhängigen Leckage der hydraulischen Stelleinrichtungen und eine daraus abgeleitete sichere Erkennung einer End- oder Zwischenposition der Kolbenelemente der Stelleinrichtungen der erfindungsgemäßen Vorrichtung;
- Fig.8a: mehrere Betriebszustandsverläufe der Vorrichtung gemäß Fig. 1 während einer Betätigung des Kolbenelementes der ersten Stelleinrichtung, wobei das Kolbenelement aus seiner ersten Endlage vollständig in seine zweite Endlage umgeschoben wird;
- Fig.8b: eine Fig. 8a entsprechende Darstellung, wobei das Kolbenelement der Ausführungsförm der Vorrichtung gemäß Fig. 1 ausgehend von seiner ersten Endlage in Richtung seiner zweiten Endlage verfahren wird und die zweite Endlage nicht erreicht;
- Fig.8c: eine Fig. 8a entsprechende Darstellung während eines Betriebszustandsverlaufes der Vorrichtung gemäß Fig. 1, während dem das Kolbenelement ausgehend aus seiner ersten Endlage in Richtung seiner zweiten Endlage anforderungsgemäß verfahren werden soll, jedoch eine Bewegung des Kolbenelementes unterbleibt;
- Fig.9a: eine Fig. 8a entsprechende Darstellung mehrerer Verläufe verschiedener Betriebszustandsparameter der Vorrichtung gemäß Fig. 3;
- Fig.9b: eine Fig. 8b entsprechende Darstellung die Vorrichtung gemäß Fig. 3 betreffend;
- Fig.9c: eine Fig. 8c entsprechende Darstellung die Vorrichtung gemäß Fig. 3 betreffend;
- Fig.10a: eine Fig. 8a entsprechende Darstellung während eines Betriebszustandsverlaufes der Vorrichtung gemäß Fig. 4, bei dem das Kolbenelement einer Stelleinrichtung ausgehend von einer ersten Endlage in eine zweite Endlage vollständig umgeschoben wird;
- Fig.10b: eine Fig. 8b entsprechende Darstellung die Vorrichtung gemäß Fig. 4 betreffend;
- Fig.10c: eine Fig. 8c entsprechende Darstellung die Vorrichtung gemäß Fig. 4 betreffend.

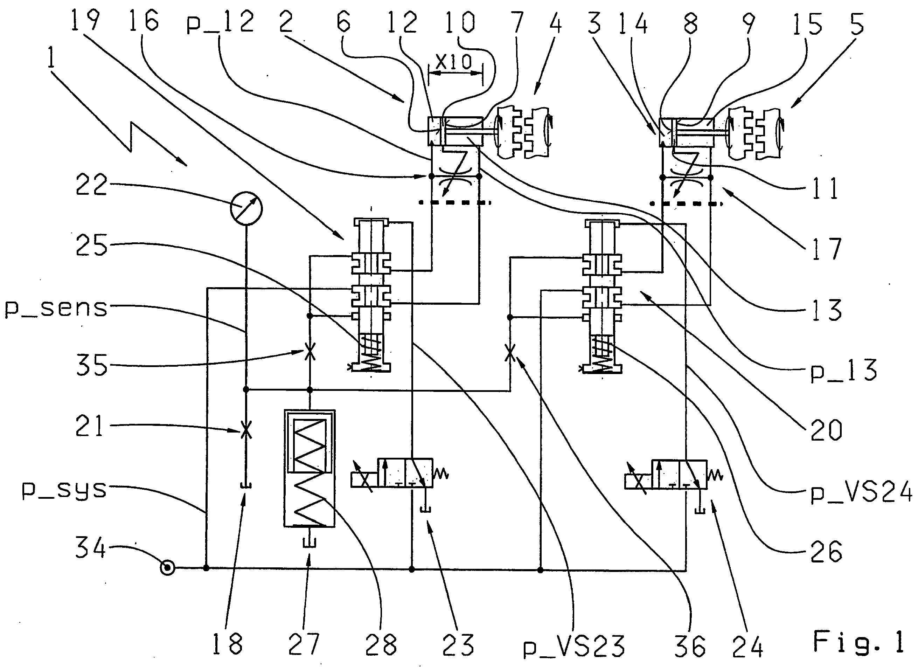

Fig. 1 zeigt ein Hydraulikschema einer Vorrichtung 1 zum Bestimmen eines Betriebszustandes von zwei bidirektional betätigbaren hydraulischen Stelleinrichtungen 2, 3 von vorliegend als Klauenschaltelementen ausgeführten Schaltelementen 4, 5, wobei die Schaltelemente 4, 5 in Abhängigkeit des jeweils vorliegenden Anwendungsfalles auch als reibschlüssige Schaltelemente, wie Lamellenkupplungen oder -bremsen ausgeführt sein können. Die Stelleinrichtungen 2, 3 sind jeweils im Bereich von Wirkflächen 6, 7 bzw. 8, 9 eines Kolbenelementes 10, 11 mit Hydraulikdruck beaufschlagbar.

Bei Anliegen eines Hydraulikdruckes p_sys eines Hochdruckbereiches 34 im Bereich einer ersten Wirkfläche 6 oder 8 an dem Kolbenelement 10 oder 11 greift eine in Richtung einer ersten Endlage des Kolbenelementes 10 oder 11 wirkende Kraftkomponente an. Liegt der Hydraulikdruck p_sys des Hochdruckbereiches 34 dagegen an der zweiten Wirkfläche 7 oder 9 des Kolbenelementes 10 oder 11 an, greift an dem Kolbenelement 10 oder 11 eine in Richtung einer zweiten Endlage des Kolbenelementes 10 oder 11 wirkende Kraftkomponente an.

Mit dem Hydraulikdruck p_sys des Hochdruckbereiches 34 beaufschlagbare und den Wirkflächen 6, 7 bzw. 8, 9 der Kolbenelemente 10 bzw. 11 zugeordnete Bereiche 12, 13 bzw. 14, 15 bzw. Kolbenräume sind in Stellungen der Kolbenelemente 10, 11 zwischen deren Endlagen jeweils über eine Drosseleinrichtung 16 bzw. 17 miteinander verbunden. Zusätzlich ist jeweils einer der Bereiche 12 oder 13 bzw. 14 oder 15 zum Verstellen eines Kolbenelementes 10 oder 11 mit dem Hochdruckbereich 34 und jeweils der andere Bereich 13 oder 12 bzw. 15 oder 14 mit einem Niederdruckbereich 18 koppelbar. Hierfür sind zwei Ventileinrichtungen 19, 20 vorgesehen, in deren Bereiche die Kolbenräume 12,13 bzw. 14, 15 jeweils entweder mit dem Hochdruckbereich 34 oder dem Niederdruckbereich 18 koppelbar sind.

Stromauf des Niederdruckbereiches 18 und stromab der Ventileinrichtungen 19, 20 ist eine weitere Drosseleinrichtung 21 und wiederum stromauf der weiteren Drosseleinrichtung 21 sowie stromab der Ventileinrichtungen 19 und 20 ist eine Druckmesseinrichtung 22 vorgesehen. Die vorliegend als 4/2-Wegeventile ausgeführten Ventileinrichtungen 19 und 20 sind jeweils über einen vorliegend als Magnetventil ausgebildeten elektrohydraulischen Aktor 23 bzw. 24 entgegen einer Federeinrichtung 25 bzw. 26 mit einem aus dem Hochdruckbereich 34 versorgten Steuerdruck p_VS23, p_VS24 beaufschlagbar, um die Stelleinrichtungen 2, 3 anforderungsgemäß im Bereich der Kolbenräume 12 und 13 bzw. im Bereich der Kolbenräume 14 und 15 mit dem Hydraulikdruck p_sys des Hochdruckbereiches 34 zu beaufschlagen oder mit dem Niederdruckbereich 18 zu verbinden.

Dadurch, dass zur Überwachung der Position der beiden Kolbenelemente 10 und 11 eine einzige Druckmesseinrichtung 22 vorgesehen ist, sind zwischen dem Hydraulikspeicher 27 und den Ventileinrichtungen 19 und 20 bzw. zwischen dem Druckbegrenzungsventil 33 und den Ventileinrichtungen 19 und 20 jeweils Blenden 35, 36 vorgesehen, die eine gegenseitige Beeinflussung der Betätigungskolben 10 und 11 im Betätigungsfall ausschließen.

Über die Druckmesseinrichtung 22, die einen einfachen Drucksensor bzw. Druckschalter umfasst, ist eine Endlagensensierung der Positionen der Kolbenelemente 10,11 durchführbar. Zusätzlich ist die Positionssensierung idealerweise im Bereich der hydraulischen Steuerung vorgesehen, wobei alle Endpositionen der Kolbenelemente 10 und 11 mittels eines einzigen Drucksensors in der nachfolgend näher beschriebenen Art und Weise ermittelbar sind.

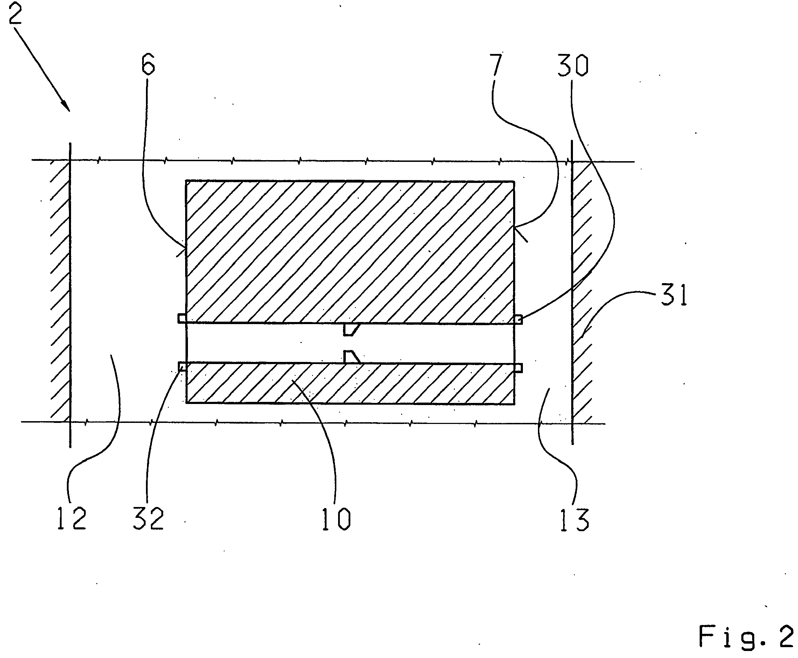

Zwischen den beiden Endlagen der Kolbenelemente 10 und 11 sind die Kolbenräume 12 und 13 bzw. 14 und 15 über die Drosseleinrichtungen 16 und 17 positionsabhängig miteinander verbunden, wobei die Drosseleinrichtungen 16 und 17 beispielsweise gemäß dem in Fig. 2 näher dargestellten Umfang ausgeführt sein können.

Die Drosseleinrichtungen 16 und 17 bzw. die Verbindungen zwischen den Kolbenräumen 12 und 13 bzw. 14 und 15 im Bereich der Drosseleinrichtungen 16 und 17 werden von den Kolbenelementen 10 und 11 immer dann freigegeben, wenn sich die Kolbenelemente 10 und 11 nicht in ihren Endlagen befinden.

Dabei wird über die Drosseleinrichtungen 16 und 17 in Stellungen der Kolbenelemente 10 und 11 zwischen deren Endlagen jeweils ein Hydraulikfluidvolumenstrom ausgehend von dem Kolbenraum 12 oder 13 bzw. 14 oder 15, der mit dem Hochdruckbereich 34 über die Ventileinrichtung 19 oder 20 verbunden ist, in Richtung des Kolbenraumes 13 oder 12 bzw. 15 oder 14 geführt, der mit dem Niederdruckbereich 18 gekoppelt ist, der vorliegend der Getriebesumpf der Getriebeeinrichtung ist.

Im Bereich der eine Staublende darstellenden weiteren Drosseleinrichtung 21 baut sich in Abhängigkeit des Drosselquerschnittes der weiteren Drosseleinrichtung 21 in Abhängigkeit des vom Kolbenraum 12 oder 13 bzw. 14 oder 15 in Richtung des Niederdruckbereiches 18 strömenden Leckagestromes ein Staudruck p_sens auf, der im Bereich der Druckmesseinrichtung 22 messtechnisch ermittelt wird.

Zusätzlich ist stromauf der weiteren Drosseleinrichtung 21 ein Hydraulikspeicher 27 vorgesehen, der vorliegend als Feder-Kolbenspeicher ausgeführt ist und in Abhängigkeit des jeweils vorliegenden Anwendungsfalles auch jede andere geeignete konstruktive Ausführung eines Hydraulikspeichers sein kann. Das Speichervolumen des Hydraulikspeichers 27 entspricht wenigstens annähernd dem Hydraulikfluidvolumen, welches bei einer Bewegung des Kolbenelementes 10 oder 11 ausgehend von einer Endlage in die andere Endlage vom Kolbenelement 10 oder 11 verdrängt wird. Dabei ist zu berücksichtigen, dass bei unterschiedlich groß verdrängten Hydraulikfluidvolumina das Speichervolumen des Hydraulikspeichers 27 dem größten verdrängten Hydraulikfluidvolumen zu entsprechen hat, um die nachfolgend näher beschriebene Funktionalität der Vorrichtung 1 in gewünschtem Umfang auf einfache Art und Weise zur Verfügung stellen zu können.

Der Hydraulikspeicher 27 ist unterhalb einer vordefinierten Druckschwelle p_sens_schwell, ab der über die Druckmesseinrichtung 22 eine Funktionsstörung im Bereich der Stelleinrichtung 2 bzw. 3 ermittelt wird, vollständig befüllbar. Hierfür ist die Federkraft einer Federeinrichtung 28 des Hydraulikspeichers 27 bzw. der daraus resultierende dynamische Betätigungsdruck des als Volumendämpfers wirkenden Hydraulikspeichers 27 kleiner als die Druckschwelle p_sens_schwell der Druckmesseinrichtung 22 bzw. als die zu diagnostizierende Druckschwelle auszulegen.

Wird das Kolbenelement 10 oder 11 aufgrund einer entsprechenden Anforderung ausgehend von einer Endlage in seine andere Endlage überführt, wird das aus dem Kolbenraum 12 oder 13 bzw. 14 oder 15 jeweils ausgeschobene Hydraulikfluid über die Ventileinrichtung 19 oder 20 zunächst entgegen der Federkraft der Federeinrichtung 28 in den nicht befüllten Hydraulikspeicher 27 eingeleitet, wobei sich dann stromab der Ventileinrichtung 19 und der Ventileinrichtung 20 während der Befüllung des Hydraulikspeichers 27 kein nennenswerter Staudruck p_sens aufbaut und eine Reduzierung der Verschiebegeschwindigkeit des Kolbenelementes 10 bzw. 11 unterbleibt.

Erreicht das Kolbenelement 10 oder 11 seine angeforderte Endlage, wird die Drosseleinrichtung 16 bzw. 17 vom Kolbenelement 10 bzw. 11 verschlossen und der Leckagevolumenstrom ausgehend vom Kolbenraum 12 oder 13 bzw. 14 oder 15, der mit dem Hochdruckbereich 34 über die Ventileinrichtung 19 oder 20 verbunden ist, in Richtung des Kolbenraumes 13 oder 12 bzw. 15 oder 14, der mit dem Niederdruckbereich 18 über die Ventileinrichtung 19 oder 20 verbunden ist, unterbrochen. Dies führt dazu, dass stromab der Ventileinrichtung 19 bzw. 20 in Richtung des Niederdruckbereiches 18 der Hydraulikdruck abfällt und der Hydraulikspeicher 27 aufgrund der Federeinrichtung 28 mit zunehmender Betriebsdauer in Richtung des Niederdruckbereiches 18 entleert wird. In diesem Betriebszustand der Vorrichtung 1 liegt an der Druckmesseinrichtung 22 kein diagnostizierbarer Druckwert an.

Befindet sich das Kolbenelement 10 nach der Betätigung nicht in seiner angestrebten Endlage, bewirkt der weiterhin vorliegende aktive Leckagevolumenstrom im Bereich der nicht gesperrten Drosseleinrichtung 16 ein vollständiges Befüllen des Hydraulikspeichers 27. Ist der Hydraulikspeicher 27 vollständig befüllt, erfolgt ein sehr schneller Anstieg des Staudrucks p_sens stromauf der weiteren Drosseleinrichtung 21, der im Bereich der Druckmesseinrichtung 22 diagnostizierbar ist.

Fig. 2 zeigt eine stark schematisierte Darstellung des Kolbenelementes 10 der Stelleinrichtung 2 in einer Zwischenstellung, in der der Kolbenraum 12 über eine im Kolbenelement 10 vorgesehene Drosselbohrung 29 mit dem Kolbenraum 13 verbunden ist. In der ersten Endlage des Kolbenelementes 10, in der das Volumen des Kolbenraumes 13 minimal ist, kommt das Kolbenelement 10 mit einer Dichteinrichtung 30 an einer Zylinderwand 31 der Stelleinrichtung 2 zum Anliegen, womit die Drosselbohrung 29 in diesem Bereich verschlossen und die Verbindung zwischen den Kolbenräumen 12 und 13 getrennt ist. In der zweiten Endstellung des Kolbenelementes 10, in dem das Volumen des Kolbenraumes 12 minimal ist, kommt das Kolbenelement 10 mit einer weiteren Dichteinrichtung 32 ebenfalls mit der Zylinderwand 31 in Anlage und die Drosselbohrung 29 wird dichtend verschlossen, womit die Kolbenräume 12 und 13 wiederum voneinander getrennt sind.

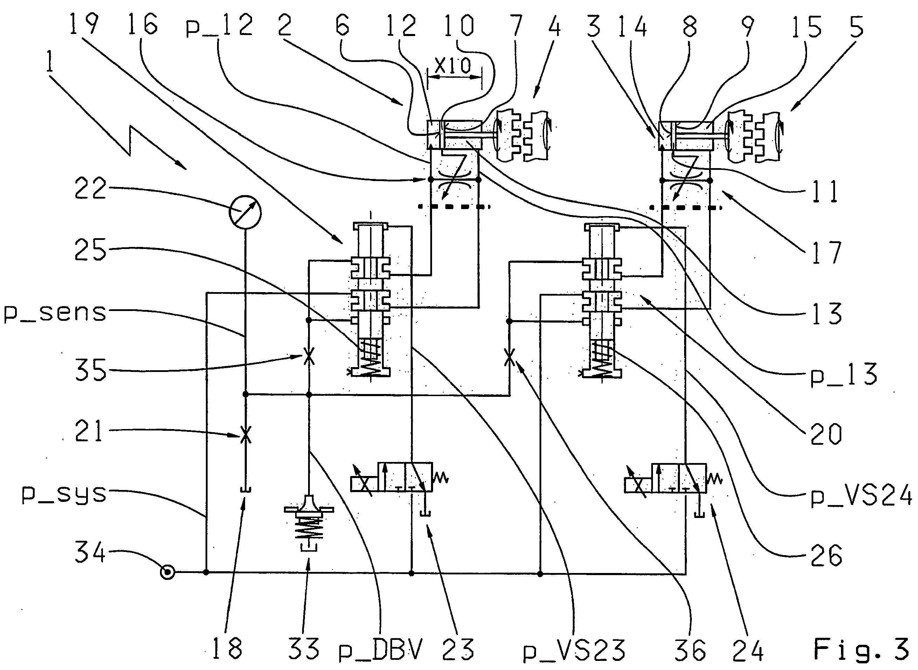

Ein zweites Ausführungsbeispiel der erfindungsgemäßen Vorrichtung 1 ist in Fig. 3 gezeigt, die im Wesentlichen der Vorrichtung 1 gemäß Fig. 1 entspricht und anstatt dem Hydraulikspeicher 27 stromab der Ventileinrichtungen 19 und 20 und stromauf der weiteren Drosseleinrichtung 21 mit einem Druckbegrenzungsventil 33 ausgebildet ist. In der nachfolgenden Beschreibung der Vorrichtung 1 gemäß Fig. 3 wird im Wesentlichen lediglich auf die Unterschiede zur Vorrichtung 1 gemäß Fig. 1 eingegangen und bzgl. der weiteren Funktionsweise der Vorrichtung 1 gemäß Fig. 3 auf die Beschreibung zu Fig. 1 und Fig. 2 verwiesen.

Der Ansprechdruck p_DBV des Druckbegrenzungsventils 33 liegt oberhalb der vordefinierten Druckschwelle p_sens_schwell der Druckmesseinrichtung 22, ab der über die Druckmesseinrichtung 22 eine Funktionsstörung im Bereich der Stelleinrichtung 2 bzw. 3 ermittelt wird. Aufgrund der Anordnung des Druckbegrenzungsventils 33 stromauf der weiteren Drosseleinrichtung 21 steigt der Druck stromab der Ventileinrichtungen 19 und 20 und stromauf der weiteren Drosseleinrichtung 21 während der Betätigung des Kolbenelementes 10 bzw. 11 mindestens auf den Ansprechdruck p_DBV des Druckbegrenzungsventils 33 an. Nach Erreichen der Endlage des Kolbenelementes 10 oder 11 wird der Leckagevolumenstrom im Bereich der Drosseleinrichtung 16 bzw. 17 durch das Kolbenelement 10 oder 11 in vorbeschriebener Art und Weise unterbrochen, womit der Hydraulikdruck p_sens stromauf der weiteren Drosseleinrichtung 21 das Druckniveau des Ansprechdrucks p_DBV des Druckbegrenzungsventils 33 nicht mehr erreichen kann. Dies resultiert aus der Tatsache, dass das Hydrauliksystem stromauf der Ventileinrichtungen 19 und 20 über die weitere Drosseleinrichtung 21 in Richtung des Niederdruckbereiches 18 entlüftet wird.

Erreicht das Kolbenelement 10 nicht die angestrebte Endlage, bleibt der Leckagevolumenstrom über die Drosseleinrichtung 16 groß und führt im Bereich der Staublende 21 zu einem Druckanstieg, bis das Druckbegrenzungsventil 33 anspricht und den Druck p_sens im System begrenzt. Der Druck p_sens in der die weitere Drosseleinrichtung 21 aufweisenden Tankleitung steigt dabei auf ein Niveau an, das im Bereich der Druckmesseinrichtung 22 die vordefinierte Druckschwelle p_sens_schwell überschritten wird und das elektronische Getriebesteuergerät mit einem Signal beaufschlagt wird, das einer fehlerhaften Kolbenstellung entspricht.

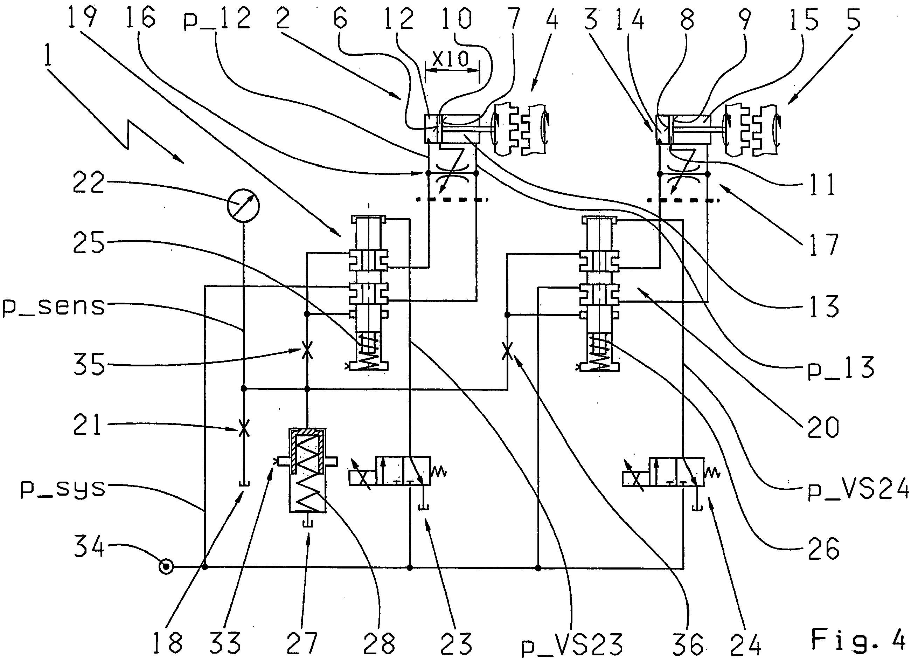

Fig. 4 zeigt ein drittes Ausführungsbeispiel der Vorrichtung 1, die im Bereich zwischen der weiteren Drosseleinrichtung 21 und den Ventileinrichtungen 19 und 20 eine Kombination aus dem Hydraulikspeicher 27 und dem Druckbegrenzungsventil 33 aufweist. Ansonsten entspricht die Vorrichtung 1 gemäß Fig. 4 im Wesentlichen den Vorrichtungen 1 gemäß Fig. 1 und Fig. 3, weshalb bzgl. der weiteren Funktionalität der Vorrichtung 1 gemäß Fig. 4 auf die Beschreibung zu Fig. 1 bis Fig. 3 verwiesen wird.

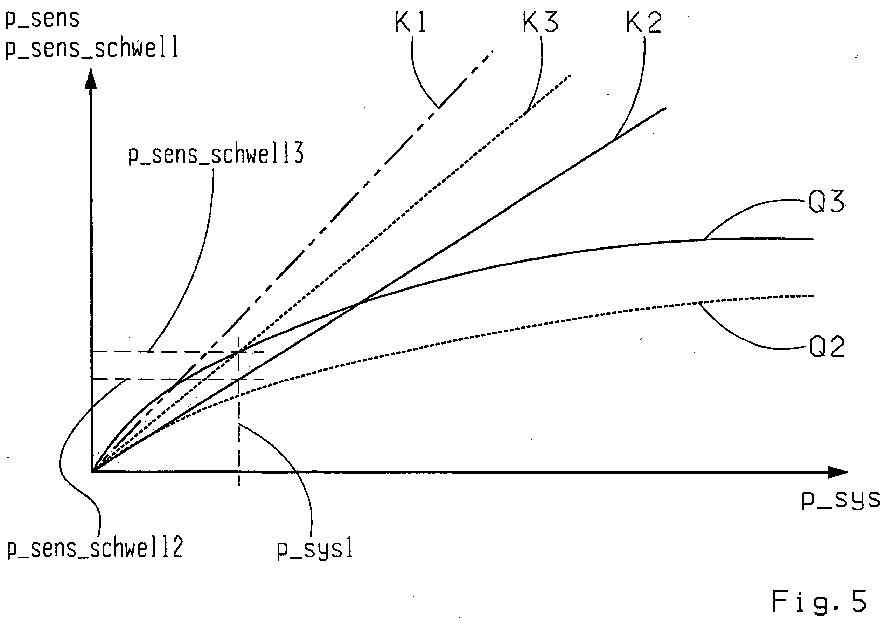

In Fig. 5 ist die Abhängigkeit der Druckschwelle p_sens_schwell der Druckmesseinrichtung 22 bzw. des sich im Bereich der weiteren Drosseleinrichtung 21 einstellenden Staudruckes p_sens vom Hydraulikdruck p_sys des Hockdruckbereiches 34 in Stellungen der Kolbenelemente 10 und 11 zwischen den Endlagen bei gleichzeitiger Überwachung der beiden Stelleinrichtungen 2 und 3 durch die lediglich eine Druckmesseinrichtung 22 näher gezeigt. Eine erste Kennlinie K1 zeigt die Abhängigkeit zwischen der Druckschwelle p_sens_schwell vom Hydraulikdruck p_sys des Hochdruckbereiches 34 bei einem Drosselquerschnitt der weiteren Drosseleinrichtung 21 gleich null, wobei die Steigung der Kennlinie K1 gleich eins ist. Die Steigung einer Kennlinie K3 entspricht dem Flächenverhältnis zwischen der Drosselfläche der der Stelleinrichtung 3 zugeordneten Drosseleinrichtung 17 und der Drosselfläche der weiteren Drosseleinrichtung 21, das vorliegend etwa 0,7 ist. Die Steigung einer weiteren Kennlinie K2 entspricht dem Flächenverhältnis zwischen der Drosselfläche der der Stelleinrichtung 2 zugeordneten Drosseleinrichtung 16 und der Drosselfläche der weiteren Drosseleinrichtung 21, welches vorliegend im Wesentlichen gleich 0,5 ist. Aufgrund des der Kennlinie K3 zugrunde liegenden Flächenverhältnisses stellt sich in Stellungen des Kolbenelementes 11 zwischen seinen Endlagen ein in Abhängigkeit des Hydraulikdrucks p_sys des Hochdruckbereiches 34 stehender Hydraulikfluidvolumenstrom Q3 ein, während sich ein Hydraulikfluidvolumenstrom Q2 in Abhängigkeit des der Kennlinie K2 zugrunde liegenden Flächenverhältnisses zwischen den Drosseleinrichtungen 16 und 21 einstellt.

Aufgrund der unterschiedlichen Flächenverhältnisse zwischen der Drosseleinrichtung 16 und der weiteren Drosseleinrichtung 21 bzw. zwischen der Drosseleinrichtung 17 und der weiteren Drosseleinrichtung 21 ergibt sich im Bereich der weiteren Drosseleinrichtung 21 zu einem beispielhaft ausgewählten Hydraulikdruckniveau p_sys1 des Hochdruckbereiches 34 im Bereich der Druckmesseinrichtung 22 während einer Betätigung der Stelleinrichtung 2 eine Druckschwelle p_sens_schwell2 und für die Stelleinrichtung 3 eine größere Druckschwelle p_sens_schwell3, die jeweils aus einem Schnittpunkt zwischen einer vertikalen Linie durch den Druckwert p_sys1 des Drucks p_sys des Hochdruckbereiches 34 und der Kennlinie K2 bzw. der Kennlinie K3 ermittelbar sind.

Das bedeutet, dass aufgrund der sich in Abhängigkeit der unterschiedlichen Flächenverhältnisse zwischen den Drosseleinrichtungen 16 und 21 bzw. 17 und 21 ergebenden unterschiedlichen Druckschwellen p_sens_schwell2 bzw. p_sens_schwell3 im Bereich der weiteren Drosseleinrichtung 21 über die Druckmesseinrichtung 22 auf unterschiedlichen Druckniveaus die beiden Stelleinrichtungen 2 und 3 definiert zugeordnet überwachbar sind.

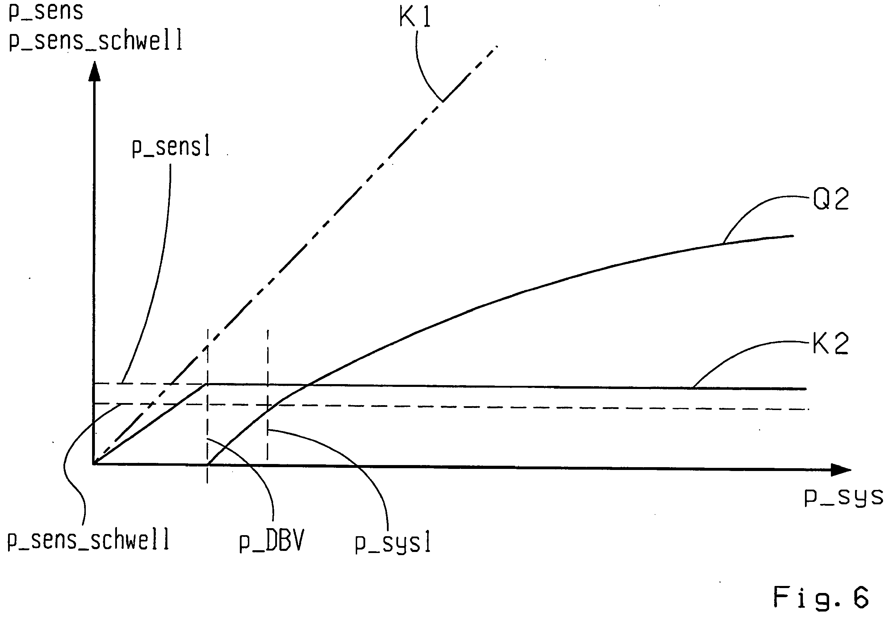

Fig. 6 zeigt eine Fig. 5 entsprechende Darstellung die Vorrichtung 1 gemäß Fig. 3 betreffend, bei der eine Unterscheidung zwischen den Stelleinrichtungen 2 und 3 im Bereich der Druckmesseinrichtung 22 in der vorbeschriebenen Art und Weise zu Fig. 5 nicht durchführbar ist. Dies resultiert aus der Tatsache, dass oberhalb des Ansprechdruckes p_DBV der Druckbegrenzungseinrichtung 33 der Staudruck p_sens im Bereich der weiteren Drosseleinrichtung 21 dem Ansprechdruck p_DBV des Druckbegrenzungsventils 33 entspricht und somit keine zwei Druckschwellen im Bereich der Druckmesseinrichtung 22 darstellbar sind.

Die Kennlinie K1 gemäß Fig. 6 stellt sich wiederum bei einem Blendendurchmesser der weiteren Drosseleinrichtung 21 gleich null ein, während die Kennlinie K2 sich in Abhängigkeit des Flächenverhältnisses zwischen der Drosseleinrichtung 16 und der weiteren Drosseleinrichtung 21 ergibt. Die Kennlinie K2 weist zunächst eine der Kennlinie K2 gemäß Fig. 5 entsprechende Steigung auf. Ab Erreichen des Ansprechdruckes p_DBV des Druckbegrenzungsventils 33 ist die Steigung der Kennlinie K2 gleich Null, da der Druck p_sens stromauf der weiteren Drosseleinrichtung 21 im Bereich des Druckbegrenzungsventils 33 auf den Ansprechdruck p_DBV begrenzt ist. Der Verlauf des Hydraulikfluidvolumenstromes Q2 ist zunächst null und steigt mit Erreichen des Ansprechdruckes p_DBV des Druckbegrenzungsventils 33 der in Fig. 6 dargestellten Art und Weise an. Die vordefinierte Druckschwelle p_sens_schwell der Druckmesseinrichtung 22, ab der über die Druckmesseinrichtung 22 in der nachfolgend näher beschriebenen Art und Weise eine Druckfunktionsstörung im Bereich der Stelleinrichtung 2 oder 3 ermittelt wird, ist vorliegend kleiner als der Druck p_sens1, der mit Erreichen des Ansprechdruckes p_DBV des Druckbegrenzungsventiles 33 im Bereich der Druckmesseinrichtung 22 anliegt.

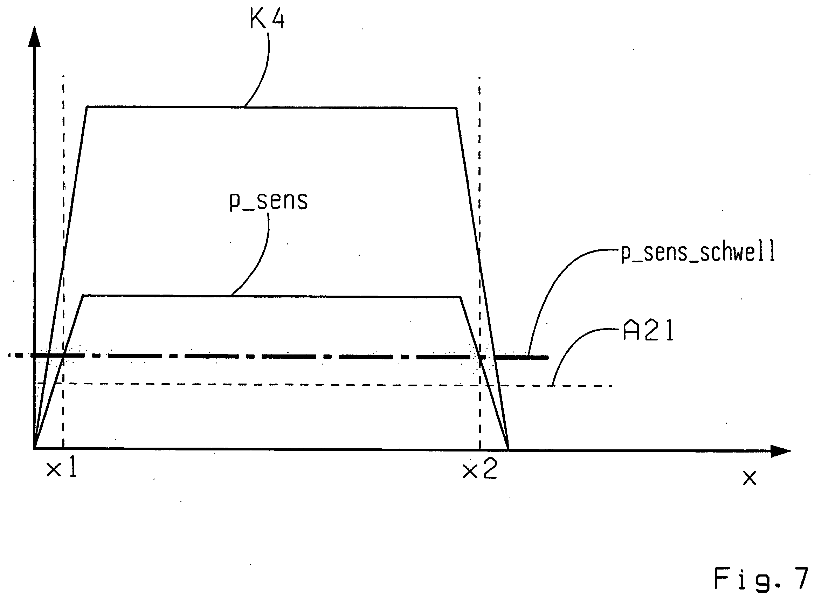

Eine in Fig. 7 näher dargestellte Grafik gibt den funktionalen Zusammenhang zwischen der kolbenelementabhängigen Leckage im Bereich der Stelleinrichtungen 2 und 3 der erfindungsgemäßen Vorrichtung 1 wieder, anhand dem die Positionsüberwachung der Kolbenelemente 10 und 11 in gewünschtem Umfang durchführbar ist. Dabei zeigt eine Kennlinie K4 eine qualitative Abhängigkeit zwischen der Drosselfläche der Drosseleinrichtung 16 bzw. 17 über einem Stellweg x des Kolbenelementes 10 bzw. 11. Des Weiteren ist der jeweils in Abhängigkeit des Stellweges x des Kolbenelementes 10 bzw.11 im Bereich der Druckmesseinrichtung 22 anliegende Druck p_sens, der vordefinierte Druckschwelle p_sens_schwell und die Drosselfläche A_21 der weiteren Drosseleinrichtung 21 gezeigt. Unterhalb eines ersten Stellwegwertes x1 und oberhalb eines zweiten Stellwegwertes x2 wird im Bereich der Druckmesseinrichtung 22 jeweils eine erste Endstellung bzw. eine zweite Endstellung des Kolbenelementes 10 bzw. 11 ermittelt, da der Sensordruck p_sens kleiner als der Diagnoseschwellwert bzw. die vordefinierte Druckschwelle p_sens_schwell ist.

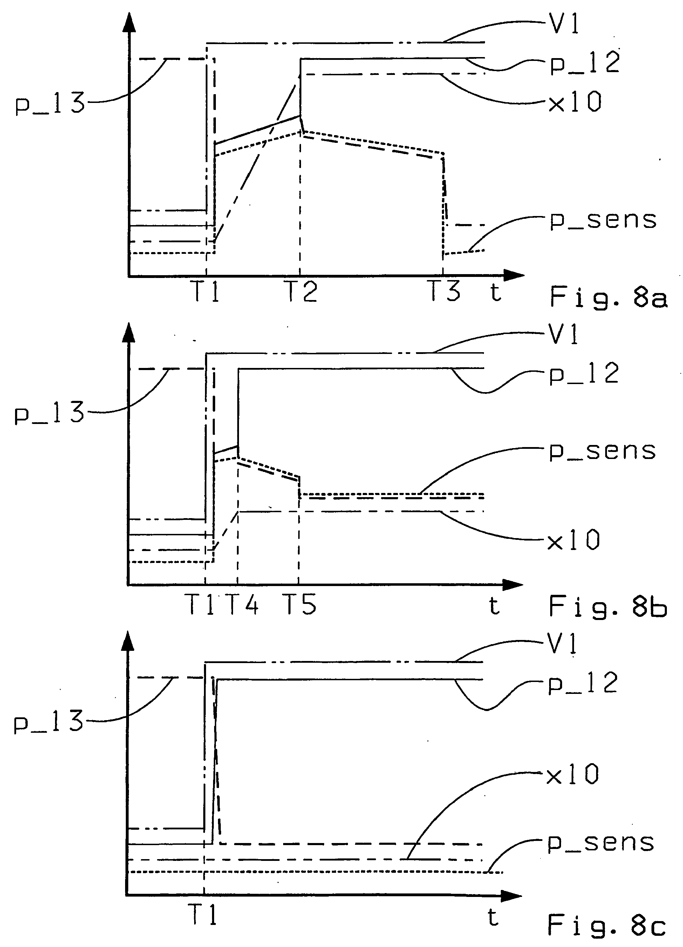

In Fig. 8a bis Fig. 8c sind mehrere Betriebszustandsverläufe über der Zeit t gezeigt, welche sich während einer Betätigung des Kolbenelementes 10 der Stelleinrichtung 2 der Vorrichtung 1 gemäß Fig. 1 ausgehend von seiner ersten Endstellung in Richtung zu seiner zweiten Endstellung während verschiedener Betriebszustandsverläufe der Vorrichtung 1 einstellen.

Bei dem der Darstellung gemäß Fig. 8a zugrunde liegenden Betriebszustandsverlauf liegt zu einem Zeitpunkt T1 eine Anforderung für einen Übersetzungswechsel in der Getriebeeinrichtung vor, bei welchem das Schaltelement 4 durch Umschaltung des Kolbenelementes 10 in seinen geschlossenen Betriebszustand zu überführen ist. Aufgrund der Schaltanforderung springt ein Verlauf V1 zum Zeitpunkt T1 sprungartig um. Nahezu gleichzeitig steigt der Hydraulikdruck p_12 im Kolbenraum 12 sprungartig an und das Kolbenelement 10 wird ausgehend von seiner ersten Endlage in Richtung seiner zweiten Endlage verschoben. Der Verlauf x10 des Stellwegs x des Kolbenelementes 10 verändert sich in der in Fig. 8a dargestellten Art und Weise. Gleichzeitig mit dem Anstieg des Hydraulikdrucks p_12 im Kolbenraum 12 fällt der Hydraulikdruck p_13 im Kolbenraum 13 auf das Niveau des Hydraulikdrucks p_12 im Kolbenraum 12 ab, da mit der Kolbenbewegung des Kolbenelementes 10 die Drosseleinrichtung 16 durch Abheben der Dichteinrichtung 32 von der Zylinderwand 31 freigegeben wird und die Kolbenräume 12 und 13 über die Drosseleinrichtung 16 miteinander verbunden sind.

Aufgrund des sich im Bereich des Hydraulikspeichers 27 und der Staublende 21 einstellenden Gegendrucks p_sens steigt sowohl der Hydraulikdruck p_12 als auch der Hydraulikdruck p_13 im Kolbenraum 12 bzw. 13 in der in Fig. 8a dargestellten Art und Weise bis zu einem Zeitpunkt T2 an, zu dem das Kolbenelement 10 eine zweite Endlage erreicht. Dann ist die Drosseleinrichtung 16 vom Kolbenelement 10 durch Anlage der Dichteinrichtung 30 an der Zylinderwand 31 gesperrt und die Kolbenräume 12 und 13 sind voneinander getrennt. Aus diesem Grund steigt wiederum der Druck p_12 im Kolbenraum 12 zum Zeitpunkt T2 sprungartig an, während der Druck p_13 im Kolbenraum 13 zunächst mit größerer Steigung sprungartig und anschließend bis zu einem Zeitpunkt T3 mit flacherer Steigung über eine Druckrampe weiter absinkt. Die flache Druckrampe resultiert aus der Tatsache, dass der Hydraulikspeicher 27 bei gesperrter Drosseleinrichtung 16 das gespeicherte Hydraulikfluid durch die Federkraft der Federeinrichtung 28 in das Leitungssystem der Vorrichtung 1 zurückschiebt. Zum Zeitpunkt T3 ist der Hydraulikspeicher 27 vollständig entleert, womit der Druck p_13 sprungartig auf einen Vorbefülldruck abfällt.

Der Verlauf des Sensordruckes bzw. des Druckes p_sens, der sich im Bereich der Druckmesseinrichtung 22 einstellt, ist ebenfalls in Fig. 8a gezeigt, wobei der Druck p_sens im Bereich der Druckmesseinrichtung 22 zum Zeitpunkt T1 zunächst sprungartig ansteigt und anschließend dem Druck p_13 des Kolbenraumes 13 folgend verläuft und zum Zeitpunkt T3 auf den Wert zum Zeitpunkt T1 wieder absinkt.

Bei dem Fig. 8b zugrundeliegenden Betriebszustandsverlauf wird das Kolbenelement 10 einer Anforderung entsprechend in dem zu Fig. 8a beschriebenen Umfang zunächst ausgehend von seiner ersten Endstellung in Richtung seiner zweiten Endstellung ausgehend vom Zeitpunkt T1 verfahren. Zu einem Zeitpunkt T4 wird das Kolbenelement 10 nicht weiter in Richtung seiner zweiten Endlage verfahren und verbleibt in einer Zwischenstellung zwischen den beiden Endlagen. Dadurch wird die Drosseleinrichtung 16 nicht in vorbeschriebenem Umfang verschlossen und es liegt ein dauerhafter Leckagestrom im Bereich der Drosseleinrichtung 16 ausgehend vom Kolbenraum 12 in Richtung des Kolbenraumes 13 vor. Aufgrund des Stillstandes des Kolbenelementes 10 zum Zeitpunkt T4 sinkt der Druck p_13 im Kolbenraum 13 zunächst sprunghaft ab und wird dann entlang einer flacheren Druckrampe bis zu einem Zeitpunkt T5 auf ein niedrigeres Druckniveau geführt.

Die sich zwischen den Zeitpunkten T5 und T4 einstellende Druckrampe resultiert wiederum aus dem Ausschiebevorgang des bereits im Bereich des Hydraulikspeichers 27 gespeicherten Hydraulikfluidvolumens, der zum Zeitpunkt T5 wieder unvollständig entleert ist. Zum Entleerzeitpunkt des Hydraulikspeichers 27 bzw. zum Zeitpunkt T5 fällt der Hydraulikdruck p_13 im Kolbenraum 13 wiederum sprungartig auf ein tieferes Niveau ab, das sich aufgrund der über die Drosseleinrichtung 16 ausgehend von Kolbenraum 12 in Richtung des Kolbenraumes 13 geführten Hydraulikfluidvolumenstromes einstellt. Der Sensordruck p_sens entspricht ab dem Zeitpunkt T5 dem Druck p_13 des Kolbenraumes 13 und liegt oberhalb des zum Zeitpunkt T1 vorliegenden Druckniveaus des Sensordrucks p_sens, womit im Bereich der Druckmesseinrichtung 22 das Nichterreichen der angestrebten Endlage des Kolbenelementes 10 der Stelleinrichtung 2 erkannt wird.

Aufgrund der Fehlerermittlung zum Zeitpunkt T5 werden wiederum entsprechende Ersatzmaßnahmen, wie beispielsweise eine Rücknahme der Ansteuerung des Kolbenelementes 10, eingeleitet.

Bei dem Fig. 8c zugrundeliegenden Betriebszustandsverlauf wird das Kolbenelement 10 trotz entsprechender Anforderung nicht von seiner ersten Endlage in Richtung seiner zweiten Endlage bewegt, weshalb sich im Verlauf des Sensordruckes p_sens keine Veränderung einstellt. Aus dem gleichmäßigen Verlauf des Sensordrucks p_sens ist diagnostizierbar, dass entweder im Bereich des Kolbenelementes 10 oder einer Ansteuerungseinheit des Kolbenelementes 10 ein Fehler vorliegt und entsprechende Ersatzmaßnahmen eingeleitet werden müssen.

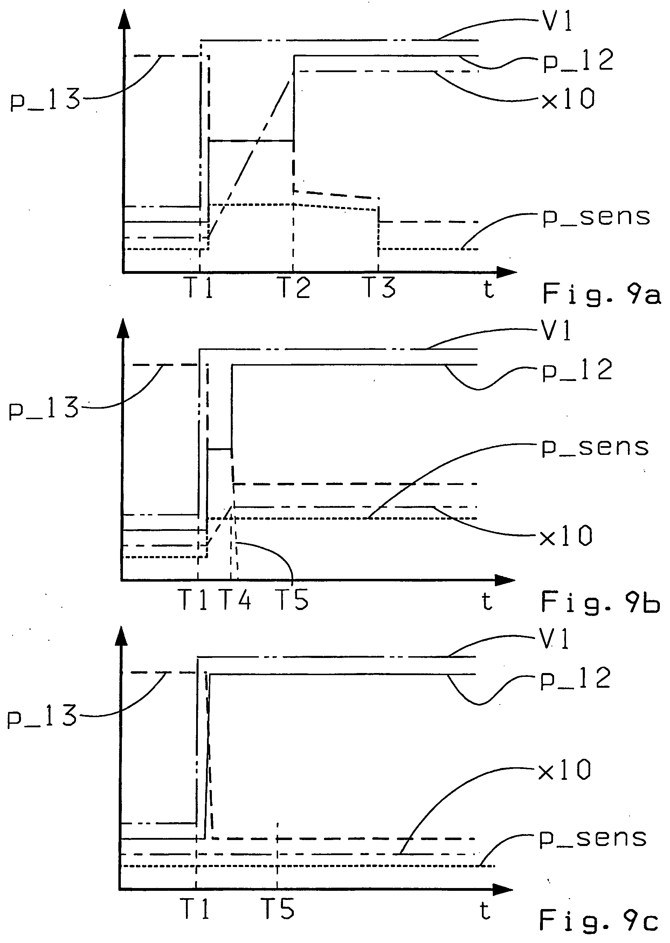

Der Darstellung gemäß Fig. 9a liegt der zu Fig. 8a beschriebene Betriebszustandsverlauf der Vorrichtung 1 gemäß Fig. 3 zugrunde, wobei der Diagnosedruck bzw. der Sensordruck p_sens im Bereich der Druckmesseinrichtung 22 zum Zeitpunkt T1 und der beginnenden Bewegung des Kolbenelementes 10 schlagartig ansteigt. Nach Erreichen der angestrebten Endlage des Kolbenelementes 10 wird die Drosseleinrichtung 16 im vorbeschriebenen Umfang geschlossen und der Sensordruck p_sens fällt wiederum schlagartig ab. Aufgrund des zeitlich begrenzt vorhandenen Sensorsignals p_22 wird das Loslaufen des Kolbenelementes 10 und auch das Erreichen der angestrebten Endlage erkannt und eine ordnungsgemäße Funktionsweise verifiziert.

Der der Darstellung gemäß Fig. 9b zugrunde liegende Betriebszustandsverlauf entspricht dem zu Fig. 8b beschriebenen Betriebszustandsverlauf, bei dem das Bestätigungselement 10 die angestrebte bzw. angeforderte Endlage nicht erreicht. Aufgrund des ab dem Zeitpunkt T1 dauerhaft vorliegenden Sensorsignals p_sens wird im Bereich des elektrischen Getriebesteuergerätes ermittelt, dass sich das Betätigungselement 10 nicht im geforderten Funktionsfenster befindet und entsprechende Ersatzmaßnahmen, wie beispielsweise die Rücknahme der Ansteuerung der Stelleinrichtung 2, eingeleitet.

Der Betriebszustandsverlauf, der der Darstellung gemäß Fig. 9c zugrunde liegt, entspricht im Wesentlichen dem zu Fig. 8c beschriebenen Betriebszustandsverlauf, bei dem das Betätigungselement 10 überhaupt nicht aus seiner Endlage in Richtung der angeforderten Endlage bewegt wird. Aufgrund des gleichbleibenden Sensordruckes p_sens werden im Bereich des elektrischen Getriebesteuergerätes ein fehlerhafter Betriebszustand im Bereich des Kolbenelementes 10 oder einer Ansteuerungseinheit des Kolbenelementes 10 ermittelt und entsprechende Ersatzmaßnahmen eingeleitet.

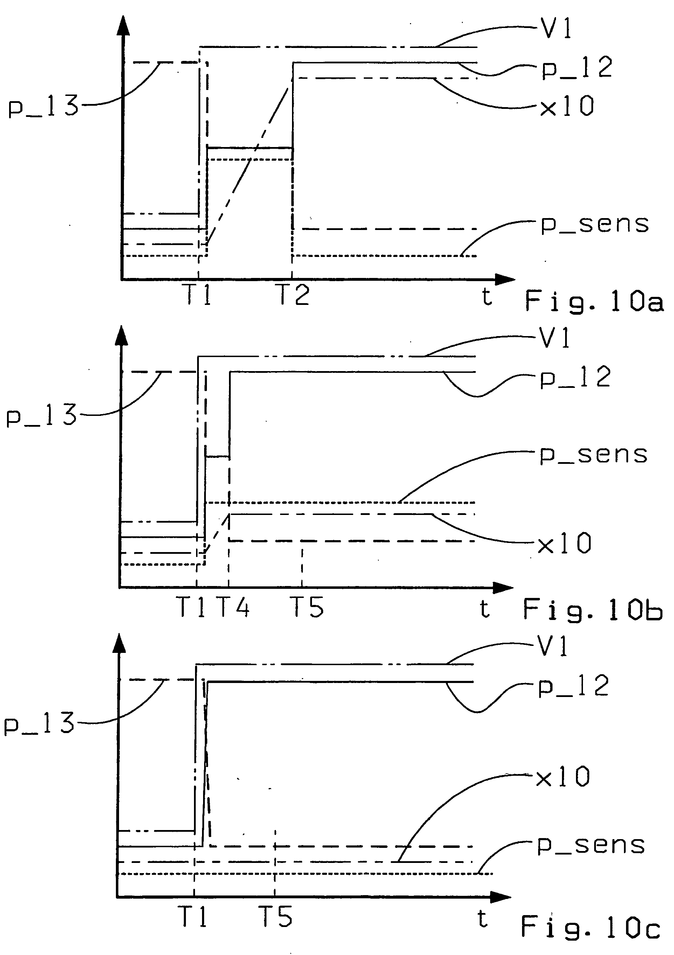

Der der Darstellung gemäß Fig. 10a zugrunde liegende Betriebszustandsverlauf entspricht ebenfalls dem zu Fig. 8a beschriebenen Betriebszustandsverlauf der Vorrichtung 1 gemäß Fig. 4, während der Betriebszustandsverlauf gemäß Fig. 10b dem zu Fig. 8b und der Betriebszustandsverlauf zu Fig. 10c dem zu Fig. 8c beschriebenen Betriebszustandsverlauf entspricht.

Zum Zeitpunkt T1 steigt der Druck p_12 im Kolbenraum 12 in der in Fig. 10a dargestellten Art und Weise sprunghaft an und fällt zum Zeitpunkt T2 wieder sprunghaft ab, da zum Zeitpunkt T2 das Kolbenelement 10 seine angestrebte Endlage erreicht hat und die Drosseleinrichtung 16 wiederum gesperrt ist. Bis zum Zeitpunkt T3 wird das im Bereich des Hydraulikspeichers 27 gespeicherte Hydraulikfluid wieder ausgeführt, wobei der Hydraulikspeicher 27 zum Zeitpunkt T3 vollständig entleert ist. Aufgrund des zeitlich begrenzt vorliegenden Sensorsignales p_sens wird sowohl das Loslaufen des Kolbenelementes 10 als auch das Erreichen der angestrebten Endlage diagnostiziert.

Aufgrund des in Fig. 10b dauerhaft vorliegenden Sensorsignales p_sens wird wiederum im Bereich des elektronischen Getriebesteuergerätes erkannt, dass sich das Kolbenelement 10 nicht im geforderten Funktionsfenster befindet und es werden definierte Ersatzmaßnahmen, wie eine Rücknahme der Ansteuerung des Kolbenelementes 10 ergriffen.

In Fig. 10c ist wiederum keine Veränderung des Sensorsignales p_sens gezeigt, weshalb im elektronischen Getriebesteuergerät entweder im Bereich des Kolbenelementes 10 oder einer Ansteuerungseinheit des Kolbenelementes 10 eine fehlerhafte Funktion angenommen wird und entsprechende Ersatzmaßnahmen eingeleitet werden.

Der Hydraulikspeicher 27 der Vorrichtung 1 gemäß Fig. 1 bzw. gemäß Fig. 4 ist besonders dann von Vorteil, wenn die Stellzeit des Kolbenelementes 10 der Stelleinrichtung 2 bzw. des Kolbenelementes 11 der Stelleinrichtung 3 zwischen den Endlagen des Kolbenelementes 10 bzw. 11 derart kurz ist, dass trotz vollständiger Verschiebung des Kolbenelementes 10 bzw. 11 dessen einwandfreie Betätigung nicht sicher verifizierbar ist. Dies ist beispielsweise dann der Fall, wenn die Tastzeit des elektrischen Getriebesteuergerätes länger ist als die Betätigungszeit bzw. die Stellzeit des Kolbenelementes 10 bzw. 11. Durch das nach Erreichen der angestrebten Endlage vorliegende Ausschieben von Hydraulikfluidvolumen aus dem Hydraulikspeicher 27 in das Leitungssystem der Vorrichtung 1 liegt das Sensorsignal p_sens auch nach Erreichen der angestrebten Endlage des Kolbenelementes 10 bzw. 11 oberhalb des Druckniveaus im Bereich der Druckmesseinrichtung 22 zum Zeitpunkt T1, womit die Erkennungszeit ohne Verlängerung der Betätigungszeit des Schaltelementes 4 oder 5 vergrößert wird.

Die Stellgeschwindigkeit des Kolbenelementes 10 bzw. 11 wird im Wesentlichen durch den zur Verfügung stehenden Betätigungsdruck p_sys des Hochdruckbereiches 34 und den maximal erreichbaren Volumenstrom bestimmt. Dabei ist sowohl der Strömungswiderstand in der Zuleitung und in der Rückleitung der Stelleinrichtung 2 bzw. 3 als auch in der die weitere Drosseleinrichtung 21 aufweisenden Tankleitung minimal zu halten. Da die Tankleitung im Bereich der Staublende bzw. der weiteren Drosseleinrichtung 21 sehr stark gedrosselt werden muss, wird die Tankleitung zur Staublende 21 durch zwei unterschiedliche hydraulische Systeme ergänzt, die auf der einen Seite eine diagnostizierbare Druckschwelle als auch eine schnelle Betätigungsdynamik zulassen.

Aufgrund der sehr hohen möglichen Druckschwelle ist die Vorrichtung 1 gemäß Fig. 1 geeignet, mehrere Betätigungssysteme bzw. Stelleinrichtungen 2 und 3 gleichzeitig zu überwachen und diese auch zu unterscheiden, da durch unterschiedlich große Leckageblenden im Bereich der Drosseleinrichtungen 16 und 17 unterschiedliche Druckniveaus in der die weitere Drosseleinrichtung 21 aufweisenden Tankleitung erreichbar sind. Für eine Unterscheidung ist die Druckmesseinrichtung 22 als Drucksensor auszuführen, wobei die diagnostizierbare Druckhöhe in der zu Fig. 5 beschriebenen Art und Weise vom Systemdruck p_sys bzw. dem Betätigungsdruck der aktuierten Druckseite der Stelleinrichtung 2 bzw. 3 abhängig ist.

### Bezugszeichen

- 1: Vorrichtung
- 2: Stelleinrichtung
- 3: Stelleinrichtung
- 4: Schaltelement
- 5: Schaltelement
- 6: Wirkfläche
- 7: Wirkfläche
- 8: Wirkfläche
- 9: Wirkfläche
- 10: Kolbenelement
- 11: Kolbenelement
- 12: Kolbenraum
- 13: Kolbenraum
- 14: Kolbenraum
- 15: Kolbenraum
- 16: Drosseleinrichtung
- 17: Drosseleinrichtung
- 18: Niederdruckbereich
- 19: Ventileinrichtung
- 20: Ventileinrichtung
- 21: Weitere Drosseleinrichtung, Staublende
- 22: Druckmesseinrichtung
- 23: elektrohydraulischer Aktor
- 24: elektrohydraulischer Aktor
- 25: Federeinrichtung
- 26: Federeinrichtung
- 27: Hydraulikspeicher
- 28: Federeinrichtung
- 29: Drosselbohrung
- 30: Dichteinrichtung
- 31: Zylinderwand
- 32: Dichteinrichtung
- 33: Druckbegrenzungsventil
- 34: Hochdruckbereich
- 35: Blende
- 36: Blende
- A_21: Drosselquerschnitt der Staublende
- K1 bis K4: Kennlinie
- Q2, Q3: Verlauf Hydraulikfluidvolumenstrom
- p_12: Hydraulikdruck
- p_13: Hydraulikdruck
- p_DBV: Ansprechdruck des Druckbegrenzungsventils
- p_sens: Staudruck, Sensordruck
- p_sens_schwell: Druckschwelle
- p_sens_schwell_2: Druckschwelle
- p_sens_schwell_3: Druckschwellwert
- p_sys: Hydraulikdruck des Hochdruckbereiches
- p_sys 1: Druckwert
- p_VS23: Steuerdruck
- p_VS24: Steuerdruck
- t: Zeit
- T1 bis T5: diskreter Zeitpunkt
- V1: Kennlinie
- x: Stellweg
- x1: Stellwegwert
- x2: Stellwegwert
- x10: Verlauf des Stellwegs des Kolbenelementes 10

## Patentansprüche

1. Vorrichtung (1) zum Bestimmen eines Betriebszustandes von wenigstens einer bidirektional betätigbaren hydraulischen Stelleinrichtung (2, 3) eines Schaltelementes (4, 5) einer Getriebeeinrichtung, die im Bereich von Wirkflächen (6, 7, 8, 9) eines Kolbenelementes (11, 12) jeweils mit Hydraulikdruck (p_12, p_13) beaufschlagbar ist, wobei an dem Kolbenelement (10 oder 11) bei Anliegen eines Hydraulikdruckes (p_sys) eines Hochdruckbereiches (34) im Bereich einer ersten Wirkfläche (6 oder 8) eine in Richtung einer ersten Endlage des Kolbenelementes (10 oder 11) wirkende Kraftkomponente und bei Anliegen eines Hydraulikdruckes (p_sys) des Hochdruckbereiches (34) im Bereich einer zweiten Wirkfläche (7 oder 9) eine in Richtung einer zweiten Endlage des Kolbenelementes (10 oder 11) wirkende Kraftkomponente angreift, **dadurch gekennzeichnet, dass** mit Hydraulikdruck beaufschlagbare und den Wirkflächen (6 bis 9) des Kolbenelementes (10, 11) zugeordnete Bereiche (12 bis 15) der Stelleinrichtung (2, 3) in Stellungen des Kolbenelementes (10, 11) zwischen den Endlagen über eine Drosseleinrichtung (16, 17) miteinander verbunden sind und jeweils einer der Bereiche (12 oder 14) zum Verstellen des Kolbenelementes (10 oder 11) mit dem Hochdruckbereich (34) und der andere Bereich (13 oder 15) mit einem Niederdruckbereich (18) koppelbar ist, wobei stromauf des Niederdruckbereiches (18) eine weitere Drosseleinrichtung (21) und wiederum stromauf der weiteren Drosseleinrichtung (21) eine Druckmesseinrichtung (22) vorgesehen sind.

2. Vorrichtung nach Anspruch 1, **dadurch gekennzeichnet, dass** zwischen den Bereichen (12 bis 15) der Stelleinrichtung (2, 3) und dem Hochsowie dem Niederdruckbereich (34, 18) eine Ventileinrichtung (19, 20) angeordnet ist.

3. Vorrichtung nach Anspruch 2, **dadurch gekennzeichnet, dass** die Ventileinrichtung (19, 20) über einen elektrohydraulischen Aktor (23, 24) entgegen einer Federeinrichtung (25, 26) mit einem Steuerdruck (p_VS23, p_VS24) beaufschlagbar ist.

4. Vorrichtung nach Anspruch 2 oder 3, **dadurch gekennzeichnet, dass** die Ventileinrichtung (19, 20) als 4/2-Wegeventil ausgebildet ist.

5. Vorrichtung nach einem der Ansprüche 1 bis 4, **dadurch gekennzeichnet, dass** stromauf der weiteren Drosseleinrichtung (21) ein Hydraulikspeicher (27) vorgesehen ist.

6. Vorrichtung nach Anspruch 5, **dadurch gekennzeichnet, dass** der Hydraulikspeicher (27) unterhalb einer vordefinierten Druckschwelle (p_sens), ab der über die Druckmesseinrichtung (22) eine Funktionsstörung im Bereich der Stelleinrichtung (2, 3) ermittelt wird, vollständig befüllbar ist.

7. Vorrichtung nach Anspruch 5 oder 6, **dadurch gekennzeichnet, dass** das Speichervolumen des Hydraulikspeichers (27) wenigstens annähernd dem Hydraulikfluidvolumen entspricht, welches bei einer Bewegung des Kolbenelementes (10, 11) ausgehend von einer Endlage in die andere Endlage verdrängt wird.

8. Vorrichtung nach einem der Ansprüche 1 bis 7, **dadurch gekennzeichnet, dass** stromauf der weiteren Drosseleinrichtung (21) ein Druckbegrenzungsventil (33) angeordnet ist, dessen Ansprechdruck (p_DBV) oberhalb einer vordefinierten Druckschwelle (p_sens_schwell), ab der über die Druckmesseinrichtung (22) eine Funktionsstörung im Bereich der Stelleinrichtung (2, 3) ermittelt wird, liegt.

9. Vorrichtung nach einem der Ansprüche 1 bis 8, **dadurch gekennzeichnet, dass** der elektrohydraulische Aktor (23, 24) mit dem Hochdruckbereich (34) in Wirkverbindung steht.

10. Vorrichtung nach einem der Ansprüche 1 bis 9, **dadurch gekennzeichnet, dass** wenigstens eine weitere Stelleinrichtung (3) eines weiteren Schaltelementes (5) über eine weitere Ventileinrichtung (20) mit dem Hochdruckbereich (34) und stromauf der weiteren Drosselrichtung (21) und der Druckmesseinrichtung (22) mit dem Niederdruckbereich (18) in Wirkverbindung bringbar ist.

11. Vorrichtung nach Anspruch 10, **dadurch gekennzeichnet, dass** die weitere Stelleinrichtung (3) ebenfalls im Bereich von Wirkflächen (8, 9) eines Kolbenelementes (11) jeweils mit Hydraulikdruck beaufschlagbar ist, wobei an dem Kolbenelement (11) bei Anliegen eines Hydraulikdruckes (p_sys) des Hochdruckbereiches (34) im Bereich einer ersten Wirkfläche (8) eine in Richtung einer ersten Endlage des Kolbenelementes (11) wirkende Kraftkomponente und bei Anliegen eines Hydraulikdruckes (p_sys) des Hochdruckbereiches (34) im Bereich einer zweiten Wirkfläche (9) eine in Richtung einer zweiten Endlage des Kolbenelementes (11) wirkende Kraftkomponente angreift.

12. Vorrichtung nach Anspruch 10 oder 11, **dadurch gekennzeichnet, dass** mit Hydraulikdruck beaufschlagbare und den Wirkflächen (8, 9) des Kolbenelementes (11) zugeordnete Bereiche (14, 15) der Stelleinrichtung (3) des weiteren Schaltelementes (5) in Stellungen des Kolbenelementes (11) zwischen den Endlagen über eine zusätzliche Drosseleinrichtung (17) miteinander verbunden sind und jeweils einer der Bereiche (14 oder 15) zum Verstellen des Kolbenelementes (11) mit dem Hochdruckbereich (34) und der andere Bereich (15 oder 14) mit einem Niederdruckbereich (18) koppelbar ist, wobei stromauf des Niederdruckbereiches (18) die weitere Drosseleinrichtung (21) und wiederum stromauf der weiteren Drosseleinrichtung (21) die Druckmesseinrichtung (22) vorgesehen sind.

13. Vorrichtung nach einem der Ansprüche 10 bis 12, **dadurch gekennzeichnet, dass** der Drosselquerschnitt der dem Schaltelement (4) zugeordneten Drosseleinrichtung (16) und der Drosselquerschnitt der dem weiteren Schaltelement (5) zugeordneten zusätzlichen Drosseleinrichtung (17) voneinander abweichen.

## Claims

1. Device (1) for determining an operating state of at least one bidirectionaly actuable hydraulic adjusting apparatus (2, 3) of a shifting element (4, 5) of a transmission apparatus, to which device in each case hydraulic pressure (p_12, p_13) can be applied in the region of active faces (6, 7, 8, 9) of a piston element (11, 12), wherein when a hydraulic pressure (p_sys) of a high-pressure region (34) is applied in the region of a first active face (6 or 8) a force component acting in the direction of a first end position of the piston element (10 or 11) acts on the piston element (10 or 11), and when a hydraulic pressure (p_sys) of the high-pressure region (34) is applied in the region of a second active face (7 or 9) a force component which acts in the direction of a second end position of the piston element (10 or 11) acts on the piston element (10 or 11), **characterized in that** regions (12 to 15) of the adjusting apparatus (2, 3) to which hydraulic pressure can be applied and which are assigned to the active faces (6 to 9) of the piston element (10, 11) are connected to one another in positions of the piston element (10, 11) between the end positions by means of a throttle apparatus (16, 17), and in each case one of the regions (12 or 14) can be coupled to the high-pressure region (34), and the other region (13 or 15) to a low-pressure region (18), in order to adjust the piston element (10 or 11), wherein a further throttle apparatus (21) is provided upstream of the low-pressure region (18), and a pressure-measuring apparatus (22) is provided in turn upstream of the further throttle apparatus (21).

2. Device according to Claim 1, **characterized in that** a valve apparatus (19, 20) is arranged between the regions (12 to 15) of the adjusting apparatus (2, 3) and the high-pressure region (34) and the low-pressure region (18).

3. Device according to Claim 2, **characterized in that** a control pressure (p_VS23, p_VS24) can be applied to the valve apparatus (19, 20) counter to a spring apparatus (25, 26) via an electro-hydraulic actuator (23, 24).

4. Device according to Claim 2 or 3, **characterized in that** the valve apparatus (19, 20) is embodied as a 4/2-way valve.

5. Device according to one of Claims 1 to 4, **characterized in that** a hydraulic accumulator (27) is provided upstream of the further throttle apparatus (21).

6. Device according to Claim 5, **characterized in that** the hydraulic accumulator (27) can be filled completely below a predefined pressure threshold (p_sens), starting from which a functional fault is determined in the region of the adjusting apparatus (2, 3) by means of the pressure-measuring apparatus (22).

7. Device according to Claim 5 or 6, **characterized in that** the storage volume of the hydraulic accumulator (27) corresponds at least approximately to the volume of hydraulic fluid which is expelled from one end position into the other end position during a movement of the piston element (10, 11).

8. Device according to one of Claims 1 to 7, **characterized in that** arranged upstream of the further throttle apparatus (21) is a pressure-limiting valve (33), whose response pressure (p_DBV) is above a predefined pressure threshold (p_sens_schwell), starting from which a functional fault is determined in the region of the adjusting apparatus (2, 3) by means of the pressure-measuring apparatus (22).

9. Device according to one of Claims 1 to 8, **characterized in that** the electro-hydraulic actuator (23, 24) is operatively connected to the high-pressure region (34).

10. Device according to one of Claims 1 to 9, **characterized in that** at least one further adjusting apparatus (3) of a further switching element (5) can be operatively connected to the high-pressure region (34) via a further valve apparatus (20), and to the low-pressure region (18) upstream of the further throttle apparatus (21) and the pressure-measuring apparatus (22).

11. Device according to Claim 10, **characterized in that** in each case a hydraulic pressure can be applied to the further adjusting apparatus (3), likewise in the region of active faces (8, 9) of a piston element (11), wherein when a hydraulic pressure (p_sys) of the high-pressure region (34) is applied in the region of a first active face (8) a force component which acts in the direction of a first end position of the piston element (11) acts on the piston element (11), and when a hydraulic pressure (p_sys) of the high-pressure region (34) is applied in the region of a second active face (9) a force component which acts in the direction of a second end position of the piston element (11) acts on the piston element (11).

12. Device according to Claim 10 or 11, **characterized in that** regions (14, 15) of the adjusting apparatus (3) of the further switching element (5) to which hydraulic pressure can be applied and which are assigned to the active faces (8, 9) of the piston element (11) are connected to one another in positions of the piston element (11) between the end positions by means of an additional throttle apparatus (17), and in each case one of the regions (14 or 15) can be coupled to the high-pressure region (34), and the other region (15 or 14) to a low-pressure region (18), in order to adjust the piston element (11), wherein the further throttle apparatus (21) is provided upstream of the low-pressure region (18), and the pressure-measuring apparatus (22) is provided in turn upstream of the further throttle apparatus (21).

13. Device according to one of Claims 10 to 12, **characterized in that** the throttle cross section of the throttle apparatus (16) which is assigned to the switching element (4) and the throttle cross section of the additional throttle apparatus (17) which is assigned to the further switching element (5) differ from one another.

## Revendications

1. Ensemble (1) de détermination de l'état de fonctionnement d'au moins un dispositif hydraulique de réglage (2, 3), actionné dans deux directions, d'un élément (4, 5) de changement de rapport d'un dispositif de transmission sur les surfaces actives (6, 7, 8, 9) d'un élément de piston (11, 12) de laquelle une pression hydraulique (p_12, p_13) peut être appliquée,
une composante de force agissant dans la direction d'une première position d'extrémité de l'élément de piston (10 ou 11) agissant sur l'élément de piston (10 ou 11) lors de l'application d'une pression hydraulique (p_sys) par une partie (34) à haute pression sur une première surface active (6 ou 8) et une composante de force agissant dans la direction d'une deuxième position d'extrémité de l'élément de piston (10 ou 11) agissant sur l'élément de piston lors de l'application d'une pression hydraulique (p_sys) par la partie (34) à haute pression sur une deuxième surface active (7 ou 9),
**caractérisé en ce que**
des parties (12 à 15) du dispositif de réglage (2, 3) sur lesquelles une pression hydraulique peut agir et associées aux surfaces actives (6 à 9) de l'élément de piston (10, 11) sont reliées l'une à l'autre par l'intermédiaire d'un dispositif d'étranglement (16, 17) dans des positions de l'élément de piston (10, 11) situées entre les positions d'extrémité,
**en ce que** l'une des parties (12 ou 14) peut être accouplée à la partie (34) à haute pression et l'autre partie (13 ou 15) à une partie (18) à basse pression pour déplacer l'élément de piston (10 ou 11)
un autre dispositif d'étranglement (21) étant prévu en amont de la partie (18) à basse pression et un dispositif (22) de mesure de pression étant prévu lui-même en amont de l'autre dispositif d'étranglement (21).

2. Ensemble selon la revendication 1, **caractérisé en ce qu'**un dispositif de soupape (19, 20) est disposé entre les parties (12 à 15) du dispositif de réglage (2, 3) et la partie à haute pression ainsi que la partie à basse pression (34, 18).

3. Ensemble selon la revendication 2, **caractérisé en ce qu'**une pression pilote (p_VS23, p_VS24) peut être appliquée sur le dispositif de soupape (19, 20) par l'intermédiaire d'un actionneur électrohydraulique (23, 24) et en opposition à un dispositif à ressort (25, 26).

4. Ensemble selon les revendications 2 ou 3, **caractérisé en ce que** le dispositif de soupape (19, 20) est configuré comme soupape à 4/2 voies.

5. Ensemble selon l'une des revendications 1 à 4, **caractérisé en ce qu'**un accumulateur hydraulique (27) est prévu en amont de l'autre dispositif d'étranglement (21).

6. Ensemble selon la revendication 5, **caractérisé en ce que** l'accumulateur hydraulique (27) peut être complètement rempli en dessous d'un seuil prédéfini de pression (p_sens) à partir duquel une perturbation du fonctionnement est déterminée au niveau du dispositif de réglage (2, 3) par l'intermédiaire du dispositif (22) de mesure de pression.

7. Ensemble selon les revendications 5 ou 6, **caractérisé en ce que** le volume d'accumulation de l'accumulateur hydraulique (27) correspond au moins approximativement au volume de fluide hydraulique qui est refoulé d'une position d'extrémité à l'autre position d'extrémité lors d'un déplacement de l'élément de piston (10, 11).

8. Ensemble selon l'une des revendications 1 à 7, **caractérisé en ce qu'**une soupape (33) de limitation de pression dont la pression de réponse (p_DBV) est située au-dessus d'un seuil de pression prédéfini (p_sens_schwell) à partir duquel une perturbation du fonctionnement au niveau du dispositif de réglage (2, 3) est déterminée par l'intermédiaire du dispositif (22) de mesure de pression est disposée en amont de l'autre dispositif d'étranglement (21).

9. Ensemble selon l'une des revendications 1 à 8, **caractérisé en ce que** l'actionneur électrohydraulique (23, 24) coopère fonctionnellement avec la partie (34) à haute pression.

10. Ensemble selon l'une des revendications 1 à 9, **caractérisé en ce qu'**au moins un autre dispositif de réglage (3) d'un autre élément (5) de changement de rapport peut être amené à coopérer avec la partie (34) à haute pression par l'intermédiaire d'un autre dispositif de soupape (20) et avec la partie (18) à basse pression en amont de l'autre dispositif d'étranglement (21) et du dispositif (22) de mesure de pression.

11. Ensemble selon la revendication 10, **caractérisé en ce qu'**une pression hydraulique peut être appliquée sur l'autre dispositif de réglage (3), également au niveau de surfaces actives (8, 9) d'un élément de piston (11), une composante de force agissant dans la direction d'une première position d'extrémité de l'élément de piston (11) agissant sur l'élément de piston (11) lorsqu'une pression hydraulique (p_sys) est appliquée par la partie (34) à haute pression sur une première surface active (8) et une composante de force agissant en direction d'une deuxième position d'extrémité de l'élément de piston (11) agissant sur l'élément de piston lors de l'application d'une pression hydraulique (p_sys) par la partie (34) à haute pression sur une deuxième surface active (9).

12. Ensemble selon les revendications 10 ou 11, **caractérisé en ce que** des parties (14, 15) du dispositif de réglage (3) de l'autre élément (5) de changement de rapport sur lequel une pression hydraulique peut être appliquée et associées aux surfaces actives (8, 9) de l'élément de piston (11) sont reliées l'une à l'autre par l'intermédiaire d'un dispositif d'étranglement (17) supplémentaire dans des positions de l'élément de piston (11) situées entre les positions d'extrémité, l'une des parties (14 ou 15) pouvant être accouplée à la partie (34) à haute pression et l'autre partie (15 ou 14) à la partie (18) à basse pression pour déplacer l'élément de piston (11), l'autre dispositif d'étranglement (21) étant prévu en amont de la partie (18) à basse pression et le dispositif de mesure (22) étant lui-même prévu en amont de l'autre dispositif d'étranglement (21).

13. Ensemble selon l'une des revendications 10 à 12, **caractérisé en ce que** la section transversale d'étranglement du dispositif d'étranglement (16) associé à l'élément (4) de changement de rapport et la section transversale d'étranglement du dispositif d'étranglement (17) supplémentaire associé à l'autre élément (5) de changement de rapport sont différentes l'une de l'autre.
